# EUROPEAN PATENT SPECIFICATION

(11) **EP 2 680 066 B1**
(45) Date of publication and mention of the grant of the patent: **07.11.2018**
(21) Application number: 11859513.1
(22) Date of filing: 22.09.2011
(51) Int. Cl.: G02F 1/1335, G02F 1/1333, G02F 1/1362, G02F 1/1343

(54) **LIQUID CRYSTAL DISPLAY DEVICE**
FLÜSSIGKRISTALLANZEIGEVORRICHTUNG
DISPOSITIF D'AFFICHAGE À CRISTAUX LIQUIDES

(30) Priority: 22.02.2011 CN 201110042229
(43) Date of publication of application: 01.01.2014
(73) Proprietor: Shanghai Tianma Micro-electronics Co., Ltd., Pudong New District Shanghai 201201 (CN)
(72) Inventor: HUO, Sitao, Shanghai 201201 (CN); MA, Jun, Shanghai 201201 (CN)
(74) Representative: Patronus IP Patent- und Rechtsanwälte
(86) International application number: PCT/CN2011/080024
(87) International publication number: WO 2012/113229

(56) References cited:
- CN-A- 1 740 855
- CN-A- 101 135 786
- CN-A- 101 398 549
- US-A1- 2004 036 827
- US-A1- 2005 024 560
- US-A1- 2008 018 839
- US-A1- 2008 049 177
- US-A1- 2008 074 590
- US-A1- 2008 074 590

## Description

This application claims the priority of Chinese Patent Application No. 201110042229.8 titled with "Liquid Crystal Display Device", filed with the State Intellectual Property Office of China on February 22, 2011.

### TECHNICAL FIELD

The present invention relates to the field of Liquid Crystal Display, and especially to a Liquid Crystal Display (LCD) device.

### TECHNICAL BACKGROUND

In consideration of controlling both the backlight power and outdoor display characters, a semi-reflection and semi-transmission mode is employed in many LCD screens, to achieve an effect of luminance compensation by using ambient light reflected by a light reflection region. In the existing display technologies, display regions are divided into: a light reflection region where the reflected ambient light is used for displaying, and a light transmission region where the transmitted backlight is used for displaying. Therefore, in an environment with strong outdoor light, a better display effect can be achieved by compensating the display effect using light reflected by the light reflection regions.

However, due to a limited size of the Liquid Crystal Display device, the light transmission region and the light reflection region are constrained by each other in the same LCD device. That is, in order to increase the light transmission region, the light reflection region must be accordingly reduced, which causes a decreased reflectivity of the Liquid Crystal Display device. Conversely, if the light reflection region of the Liquid Crystal Display device shall be increased, the light transmission region must be accordingly reduced, which leads to a decreased transmissivity.

In US 20080074590A1, a color filter substrate including first areas and second areas includes a base substrate, a color filter layer and a planarization layer formed in the second areas, and a transparent electrode. The color filter layer includes a plurality of color filters formed in the first and second areas. At least one of the color filters formed in a second area has an opening that exposes a portion of the base substrate The planarization layer may be formed by a one-step exposing process that uses a mask having a transparent portion, a translucent portion and a shading portion. Therefore, the process may be simplified, and a display quality of a display apparatus may be improved.

In US 20080049177A1, a semi-transmissive type liquid-crystal display device suppresses the reduction and corrosion of the transmission or common electrode due to the cell corrosion reaction with a simple method. In each pixel region, the reflection electrode is formed over the glass plate, where the interlayer insulating film and the barrier metal film intervene between them. The reflection electrode is electrically connected to the transmission electrode by way of the barrier metal film. The transmission electrode and the corresponding scanning line thereto are apart from each other at a distance of 2 µm (preferably, 3 µm) or greater. A developer solution penetrating through the crack formed in the barrier metal film does not reach the transmission electrode (or common electrode), preventing the reduction and corrosion of the transmission or common electrode.

### SUMMARY OF THE INVENTION

The present invention aims to resolve a technical problem in the Liquid Crystal Display device of the prior art, i.e. increasing effective areas of the light reflection regions without reducing the light transmission regions, to improve a display effect of the light reflection regions, or increasing effective areas of the light transmission regions without reducing the light reflection regions, to improve a display effect of the light transmission regions, so as to improve the aperture ratio of the Liquid Crystal Display device effectively. The invention is defined by independent claim 1. Preferred embodiments are claimed in the dependent claims.

Further aspects are a Liquid Crystal Display device including an array substrate, a color film substrate, and a number of pixels located between the array substrate and the color film substrate, wherein the pixel includes a light reflection region and a light transmission region, and a span between the light reflection region and the light transmission region of adjacent pixels is not more than 1 micrometer in a direction parallel to the array substrate.

According to a further aspect the span between the light reflection region and the light transmission region of the adjacent pixels is 0 micrometer.

According to a further aspect a transparent electrode is formed in the light transmission region, a reflection metal layer is formed in the light reflection region, and the transparent electrode and the reflection metal layer of the adjacent pixels are electrically insulated.

According to a further aspect the transparent electrode and the reflection metal layer in the same pixel are electrically connected.

According to a further aspect the Liquid Crystal Display device further includes a first insulation layer on the array substrate, data lines located on the first insulation layer, and a second insulation layer covering the data lines, wherein, the data lines of the adjacent pixels are electrically insulated by the second insulation layer.

According to a further aspect the Liquid Crystal Display device further includes third insulation layers located on a partial surface of the second insulation layer, wherein, the reflection metal layers are located on surfaces of the third insulation layers, the transparent electrodes are located on the surface of the second insulation layer, and a transparent electrode and a reflection metal layer of the adjacent pixels are electrically insulated by the third insulation layers.

According to a further aspect the span between the transparent electrode and the reflection metal layer of the adjacent pixels is not more than 1 micrometer in a direction parallel to the array substrate.

According to a further aspect the span between the transparent electrode and the reflection metal layer of the adjacent pixels is 0 micrometer in the direction parallel to the array substrate.

According to a further aspect the transparent electrodes are made of tin indium oxide.

According to a further aspect color resistors and transparent electrodes covering the color resistors and a surface of the color film substrate are formed on the color film substrate.

According to a further aspect light reflected by the light reflection regions exits from the color film substrate via the color resistors.

According to a further aspect light transmitted by the light transmission regions exits from the color film substrate via the color resistors.

According to a further aspect the Liquid Crystal Display device further includes a backlight unit, wherein, the light provided by the backlight unit is transmitted by the transparent electrodes and exits from the color film substrate.

According to a further aspect of the Liquid Crystal Display device, the display region of a pixel is divided into the light reflection region and the light transmission region, and the span between the light reflection region and the light transmission region of adjacent pixels is not more than 1 micrometer. That is, a light reflection region or a light transmission region is formed within the gap between adjacent pixels. Such sufficient use of the gap between adjacent pixels improves the utilization of display regions of the Liquid Crystal Display device. Therefore, the effective areas of the light reflection regions can be increased without reducing the light transmission regions, to improve the display effect of the light reflection regions; or, the effective areas of the light transmission regions can be increased without reducing the light reflection regions, to improve the display effect of the light transmission regions. Therefore, the aperture ratio of the Liquid Crystal Display device is increased effectively.

Further, the reflection metal layers are located on the surfaces of the third insulation layers, the transparent electrodes are on the surface of the second insulation layer, and the transparent electrode and the reflection metal layer of adjacent pixels are electrically insulated by the third insulation layer. In the direction parallel to the array substrate, the span between the transparent electrode and reflection metal layer of adjacent pixels can be as small as less than 1 micrometer, even 0 micrometer, so that no invalid region not used for transmission and reflection is formed between the adjacent pixels, to improve the utilization of display regions in the Liquid Crystal Display device. Therefore, the effective areas of the light reflection regions can be increased without reducing the light transmission regions, to improve the display effect of the light reflection regions; or, the effective areas of the light transmission regions can be increased without reducing the light reflection regions, to improve the display effect of the light transmission regions. Therefore, the aperture ratio of the Liquid Crystal Display device is increased effectively.

### BRIEF DESCRIPTION OF THE DRAWINGS

Figure 1 is a schematic structural view of a light reflection region and a light transmission region in a Liquid Crystal Display device in the prior art;
Figure 2 is a schematic top view of an array substrate structure of the Liquid Crystal Display device according to an embodiment of the present invention;
Figure 3 is a schematic sectional view of the array substrate structure of the Liquid Crystal Display device according to the embodiment of the present invention as shown in Figure 2 along a line A-A'; and
Figure 4 is a schematic sectional view of an array substrate structure of the Liquid Crystal Display device according to another embodiment of the present invention along a line A-A'.

### DETAILED DESCRIPTION OF PREFERRED EMBODIMENTS

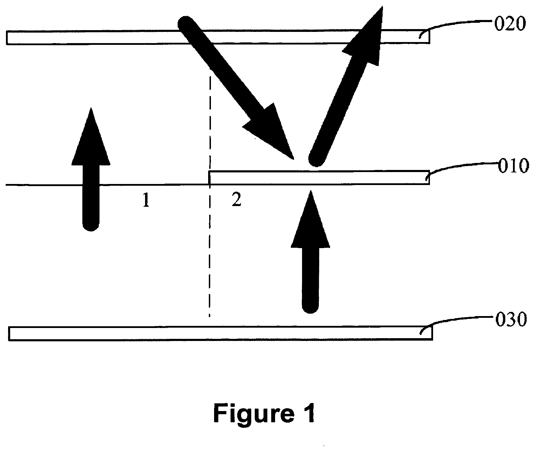

Reference is now made to Figure 1 which shows a schematic structural view of a light reflection region and a light transmission region in the Liquid Crystal Display device in the prior art, which includes a first substrate 020 for receiving ambient light and a backlight unit 030 for providing a backlight source. The interior region of the Liquid Crystal Display device is divided into a region 1 which is the light transmission region and a region 2 which is the light reflection region. Here, a reflection metal layer 010 is formed in the region 2, and is used to reflect the ambient light to provide a reflection display light source. The backlight source provided by the backlight unit 030 provides a light source for transmission display, to implement the semi-reflection and semi-transmission display.

However, due to the coexistence of the light reflection region and the light transmission region in the existing semi-reflection and semi-transmission technology, and the limitation by the size of the Liquid Crystal Display device, the light reflection region and the light transmission region in the same Liquid Crystal Display device are constrained by each other. That is, the light reflection regions must be accordingly reduced in order to increase the light transmission region, which causes a decreased reflectivity of the Liquid Crystal Display device, and conversely, the light transmission region must be accordingly reduced if it is required to increase the light reflection region in the Liquid Crystal Display device, which causes the decreased transmissivity.

The inventor found out that, in the Liquid Crystal Display device of the prior art, adjacent pixels are electrically insulated to implement different pixel electric potentials between different pixels, and gaps between adjacent pixels are invalid regions where neither light transmission region nor light reflection region is formed. For a limited area of the Liquid Crystal Display device, the display utilization of the Liquid Crystal Display device is decreased if the ratio of the invalid regions is relatively high.

In order to resolve the above problem, the present invention provides a Liquid Crystal Display device as defined in the independent claim. According to further aspects, it includes an array substrate, a color film substrate, and a number of pixels between the array substrate and the color film substrate. Here, a pixel includes a light reflection region and a light transmission region, and the span between a light reflection region of a pixel and a light transmission region of an adjacent pixel is not more than 1 micrometer in a direction parallel to the array substrate.

In the Liquid Crystal Display device, the display region of the pixel is divided into the light reflection region and the light transmission region, and the span between the light reflection region of a pixel and the light transmission region of an adjacent pixel is not more than 1 micrometer. That is, the light reflection region or the light transmission region is formed in the gap between adjacent pixels to fully utilize the gap, thereby improving the utilization of the display regions in the Liquid Crystal Display device. Therefore, effective areas of the light reflection regions can be increased without reducing the light transmission regions, to improve the display effect of the light reflection regions; otherwise, effective areas of the light transmission regions can be increased without reducing the light reflection regions, to improve the display effect of the light transmission regions.

The embodiments of the present invention will be explained in detail in conjunction with the drawings and embodiments.

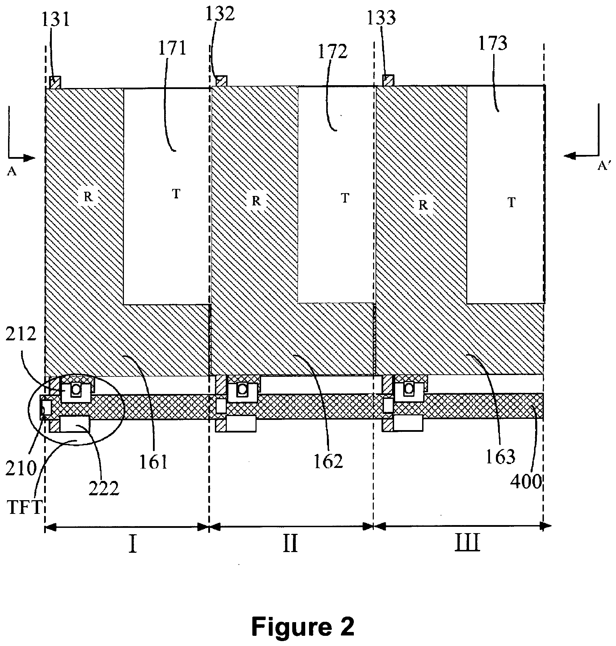

Figure 2 shows a schematic top view of the structure of an array substrate in the Liquid Crystal Display device according to an embodiment of the present invention. Here, a first substrate which is an array substrate and a second substrate which is a color film substrate are arranged in the direction perpendicular to the sheet of drawing. The structure as shown in Figure 2 includes a number of pixels arranged on the first substrate, i.e., the array substrate. Further, a liquid crystal molecule layer (not shown) is formed between the array substrate and the color film substrate, i.e. the liquid crystal molecule layer is filled into the space between the array substrate and the color film substrate, to display an image.

A side of the array substrate, on which pixels are formed, is referred to as a front side thereof, and a side opposite to the front side is a back side. A backlight source is arranged in the space faced by the back side, to provide light to the pixels from the back side of the array substrate.

Referring to Figure 2, the Liquid Crystal Display device specifically includes: data lines 131, 132 and 133, and scanning lines 400 formed by a metal layer, with the data lines and the scanning lines being arranged on the array substrate of the Liquid Crystal Display device in two directions perpendicular to each other, respectively. N scanning lines and m data lines intersect each other to implement N×m pixels in the Liquid Crystal Display device. Specifically, Figure 2 only shows one of the scanning lines 400 which is arranged in a horizontal direction, and three of the data lines 131, 132 and 133 perpendicular to the scanning line 400. Here, each data line and the scanning line perpendicular to the data line define one pixel, for example, the data line 131 and the scanning line 400 define a first pixel I, the data line 132 and the scanning line 400 define a second pixel II, and the data line 133 and the scanning line 400 define a third pixel III.

The first pixel I, the second pixel II and the third pixel III each include switching devices which are Thin Film Transistors (TFTs) and respectively formed at intersections of the scanning line 400 and the data lines 131, 132 and 133. For example, the Thin Film Transistor at the intersection of the scanning line 400 and the data line 131 includes a gate 210, a source 222 and a drain 212. Here, the gate 210 is connected to the scanning line 400, the source 222 is connected to the data line 131 and the drain 212 is connected to a capacitor plate (not shown) arranged on the array substrate, with the capacitor plate being electrically connected to the pixel. Specifically, the switching device is turned on by the gate 210 by means of a signal input from the scanning line 400, and the input signal is transmitted to the drain 212, the capacitor plate connected thereto and the pixel via the data line 131 through the source 222. The connection relationship of the TFT of one pixel is hereby described, reference to which may be made for the connection relationships of other pixels.

Further referring to Figure 2, the pixel of the Liquid Crystal Display device includes a light reflection region R and a light transmission region T, and pixel electrodes include a reflection electrode located in the light reflection region R and a transmission electrode located in the light transmission region T. The reflection electrodes in the light reflection regions R are respectively reflection metal layers 161, 162 and 163 in this embodiment.

The reflection metal layers 161, 162 and 163 each are L-shaped, that is, each of the reflection metal layers 161, 162 and 163 includes a longitudinal reflection metal layer covering the data lines and further includes a lateral reflection metal layer. Here, a storage capacitor (not shown) is formed between the lateral reflection metal layer and the array substrate under the lateral reflection metal layer.

The light transmission regions T including transparent electrodes are further formed in the pixels. In this embodiment, the transparent electrodes are those made of tin indium oxide 171, 172 and 173. Light from the backlight unit is received and transmitted by the light transmission regions T, and then received by the color film substrate for the display of the Liquid Crystal Display.

In a direction parallel to the array substrate, a distance between the light transmission region T of the first pixel I and the light reflection region R of the adjacent second pixel II is not more than 1 micrometer, and a distance between the light transmission region T of the second pixel II and the light reflection region R of the third pixel III is not more than 1 micrometer. That is, the span between the light reflection region R of a pixel and the light transmission region T of an adjacent pixel is not more than 1 micrometer, and such span may be even as small as 0 micrometer.

In the embodiment of the present invention, since the span between the light reflection region R of a pixel and the light transmission region T of an adjacent pixel is very small, that is, the light transmission regions T or the light reflection regions R may be formed in the gap between adjacent pixels, invalid display regions are very limited, and even non-existing when such span is as small as 0 micrometer, so that effective display regions of the Liquid Crystal Display device can be greatly increased to improve the aperture ratio of the Liquid Crystal Display device effectively.

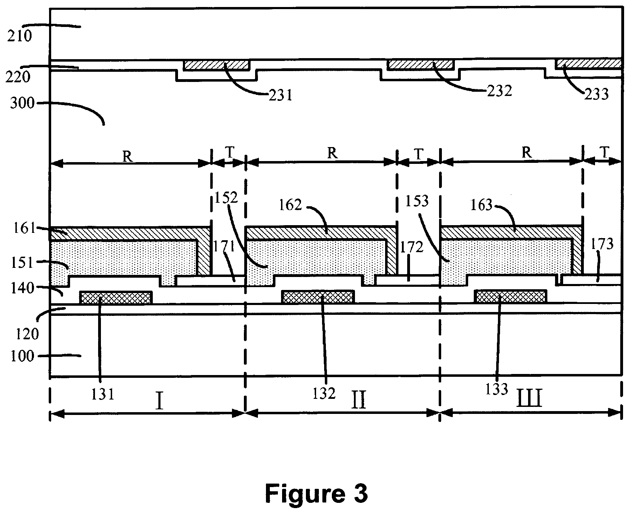

Figure 3 is a schematic diagram of the Liquid Crystal Display device, including a sectional view of the array substrate structure shown in Figure 2 along the line A-A'. The Liquid Crystal Display device includes an array substrate 100, a color film substrate 210 and a liquid crystal molecule layer 300 located between the array substrate 100 and the color film substrate 210. Liquid crystal molecules (not shown) are included in the liquid crystal molecule layer 300, and deflect due to a voltage applied between the array substrate 100 and the color film substrate 210 to achieve the display function.

Referring to Figure 3, the Liquid Crystal Display device further includes a first insulation layer 120 located on the array substrate 100, and data lines 131, 132 and 133 located on the first insulation layer 120. The pixels corresponding to the data lines 131, 132 and 133 are the first pixel I, the second pixel II and the third pixel III.

Further referring to Figure 3, a second insulation layer 140 is formed on the data lines 131, 132 and 133 to cover these data lines. In addition, the second insulation layer 140 is also formed between adjacent data lines for electrical insulation between data lines of adjacent pixels.

Referring to Figures 2 and 3, a light reflection region R and a light transmission region T are correspondingly formed in each pixel including the first pixel I, the second pixel II and the third pixel III. Here, reflection metal layers 161, 162 and 163 are formed in the light reflection regions R of the first pixel I, the second pixel II and the third pixel III. The reflection metal layers 161, 162 and 163 may receive incident ambient light from the color film substrate 210, and reflect the light for the reflection display of the Liquid Crystal Display device.

The transparent electrodes 171, 172 and 173 are formed in the light transmission regions T of the first pixel I, the second pixel II and the third pixel III. Light provided by the backlight source can be received and transmitted by the light transmission regions T, and then exit from the color film substrate 210, for the transmission display of the Liquid Crystal Display device. Here, the transparent electrodes 171, 172 and 173 may be made of transparent tin indium oxide.

As shown in Figure 3, the transparent electrodes 171, 172 and 173 of the light transmission regions T are located on the surface of the second insulation layer 140, and third insulation layers 151, 152 and 153 are correspondingly formed between the reflection metal layers 161, 162 and 163 of the light reflection regions R and the second insulation layer 140, that is, the reflection metal layers 161, 162 and 163 of the light reflection regions R are formed on the surfaces of the third insulation layers 151, 152 and 153, respectively.

Further, the third insulation layers 151, 152 and 153 are respectively used to insulate the transparent electrode of a pixel from the reflection metal layer of its adjacent pixel. As shown in Figure 3, the third insulation layer 152 is used to insulate the transparent electrode 171 of the first pixel I from the reflection metal layer 162 of the second pixel II, and the third insulation layer 153 is used to insulate the transparent electrode 172 of the second pixel II from the reflection metal layer 163 of the third pixel III.

Further referring to Figure 3, the reflection metal layer and the transparent electrode of the same pixel are electrically connected. As shown in Figure 3, the reflection metal layer 161 is electrically connected to the transparent electrode 171, the reflection metal layer 162 is electrically connected to the transparent electrode 172, and the reflection metal layer 163 is electrically connected to the transparent electrode 173.

Herein, those pixels adjacent in the direction of the scanning line are defined as the adjacent pixels, and the distance, in the direction parallel to the array substrate, between the reflection metal layer of a pixel and the transparent electrode of its adjacent pixel in the direction of the scanning line is defined as the span between the reflection metal layer and the transparent electrode of the adjacent pixels, also defined as the span between the light reflection region R and the light transmission region T of the adjacent pixels. Due to the presence of the third insulation layers 151, 152 and 153, the distance between the reflection metal layer and the transparent electrode of the adjacent pixels can be reduced, and the reflection metal layers and the transparent electrodes of adjacent pixels are insulated in the direction perpendicular to the array substrate merely by the third insulation layers 151, 152 and 153. Generally, the distance between the reflection metal layer and the transparent electrode of adjacent pixels can as small as not more than 1 micrometer. Therefore, the effective display regions of the Liquid Crystal Display device of the embodiment of the present invention can be greatly increased, to improve the aperture ratio of the Liquid Crystal Display device effectively.

Optionally, the distance between the reflection metal layer and the transparent electrode of the adjacent pixels can be 0, so as to maximally increase the effective display regions of the Liquid Crystal Display device, and hence improve the aperture ratio.

Further referring to Figure 3, a first color resistor 231, a second color resistor 232, a third color resistor 233, and a transparent electrode 220 covering the first color resistor 231, the second color resistor 232, the third color resistor 233 and the surface of the color film substrate 210 are formed on the color film substrate 210 in the Liquid Crystal Display device. The first color resistor 231, the second color resistor 232 and the third color resistor 233 are arranged above the light transmission regions T, respectively, and light transmitted by the light transmission regions T passes through the color resistors and exits from the color film substrate 210. Specifically, the color resistors receive the light transmitted by the light transmission regions, so that the transmitted light may be selectively transmitted by the color resistors of the selected colors. For example, the first color resistor 231, the second color resistor 232, or the third color resistor 233 may be selected to be of one of Red, Green and Blue to pass the light of the same color as the color resistor.

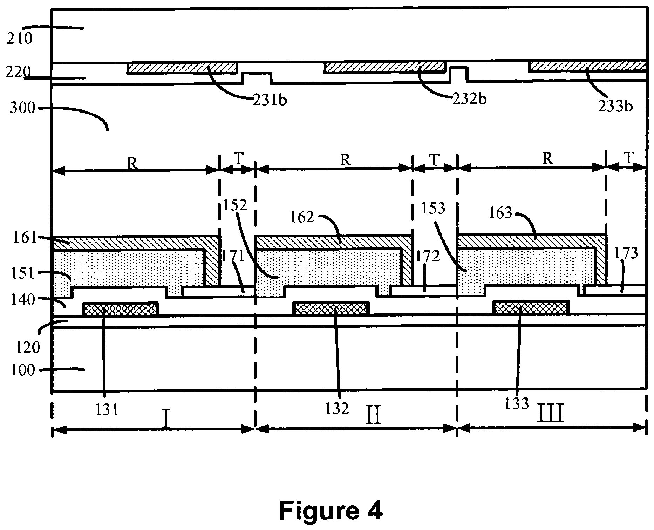

Further, the color display by both the light transmission regions T and the light reflection regions R can be implemented. As shown in Figure 4, all of a first color resistor 231b, a second color resistor 232b and a third color resistor 233b can be located above both the light reflection regions R and the light transmission regions T, respectively, so that the light transmitted by the light transmission regions T, as well as the light reflected by the light reflection regions R, exits from the color film substrate 210 via the color resistors. That is, the color resistors receive not only the transmitted light from the light transmission regions T, but also the reflected light from the light reflection regions R. Further, in order not to affect the transmittance of the light reflection region R, the color resistor covers merely a part of the light reflection region R.

Commonly, since light transmittance may vary with different colors, areas of color resistors for covering the light reflection regions of pixels of different colors are different. Generally, the covering areas of the color resistors corresponding to the light reflection regions R may be as follow: the blue color resistor is of the largest covering area, the red color resistor is of the intermediate-sized covering area and the green color resistor is the smallest covering area.

In conclusion, referring to Figures 3 and 4, there is no gap between the light transmission region (or the transparent electrode) and the light reflection region (or the reflection metal layer) of adjacent pixels, that is, the incident ambient light or the incident light from the backlight unit is either reflected on the light reflection regions or transmitted by the light transmission regions. That is, there is not any invalid region, i.e., an invalid region which is not used for the light display, formed between adjacent pixels. Therefore, the pixels of limited spaces can be sufficiently utilized. The effective areas of the light reflection regions can be increased without reducing the light transmission regions, to improve the display effect of the light reflection regions. Further, the effective areas of the light transmission regions can be increased without reducing the light reflection regions, to improve the display effect of the light transmission regions.

In the Liquid Crystal Display device provided in the embodiment of the present invention, the display region of a pixel is divided into the light reflection region and the light transmission region, and the span between the light reflection region and the light transmission region of adjacent pixels is not more than 1 micrometer. That is, a light reflection region or a light transmission region is formed within the gap between adjacent pixels. Such sufficient use of the gap between adjacent pixels improves the utilization of display regions of the Liquid Crystal Display device. Therefore, the effective areas of the light reflection regions can be increased without reducing the light transmission regions, to improve the display effect of the light reflection regions; or, the effective areas of the light transmission regions can be increased without reducing the light reflection regions, to improve the display effect of the light transmission regions. Therefore, the aperture ratio of the Liquid Crystal Display device is increased effectively.

Further, the reflection metal layers are located on the surfaces of the third insulation layers, the transparent electrodes are on the surface of the second insulation layer, and the transparent electrode and the reflection metal layer of adjacent pixels are electrically insulated by the third insulation layer. In the direction parallel to the array substrate, the span between the transparent electrode and reflection metal layer of adjacent pixels can be as small as less than 1 micrometer, even 0 micrometer, so that no invalid region not used for transmission and reflection is formed between the adjacent pixels, to improve the utilization of display regions in the Liquid Crystal Display device. Therefore, the effective areas of the light reflection regions can be increased without reducing the light transmission regions, to improve the display effect of the light reflection regions; or, the effective areas of the light transmission regions can be increased without reducing the light reflection regions, to improve the display effect of the light transmission regions. Therefore, the aperture ratio of the Liquid Crystal Display device is increased effectively.

The scope of the present invention is defined by the attached claims.

## Claims

1. A Liquid Crystal Display device, comprising:
an array substrate (100),
a color film substrate (210),
a first insulation layer (120) on the array substrate (100),
data lines (131; 132; 133) located on the first insulation layer (120),
a second insulation layer (140) covering the data lines (131; 132; 133),
and a number of pixels located between the array substrate (100) and the color film substrate (210), wherein each of the pixels includes a light reflection region (R), a third insulation layer (151; 152; 153) located on a partial surface of the second insulation layer (140) and a light transmission region (T), wherein in each of the pixels a transparent electrode (171; 172; 173) located on the surface of the second insulation layer (140) is formed in the light transmission region (T), and a reflection metal layer (161; 162; 163) located on a surface of the third insulation layer (151; 152; 153) is formed in the light reflection region (R), both of which belong to the same pixel, wherein the transparent electrodes (171; 172; 173) and the reflection metal layers (161; 162; 163) each of which is belonging to different adjacent pixels are electrically insulated from each other by the third insulation layers (151; 152; 153), and a distance between the transparent electrodes (171; 172; 173) and the reflection metal layers (161; 162; 163) each of which is belonging to different adjacent pixels is not more than 1 micrometer in a direction parallel to the surface of the array substrate (100), and wherein in each of the pixels the reflection metal layer (161; 162; 163) is L-shaped and includes a longitudinal reflection metal layer forming the first branch of the L-shape and covering the data lines and a lateral reflection metal layer forming the second branch of the L-shape, and a storage capacitor is formed between the lateral reflection metal layer and the array substrate (100) under the lateral reflection metal layer.

2. The Liquid Crystal Display device of claim 1, wherein the distance between the light reflection regions (R) and the light transmission regions (T) each of which is belonging to different adjacent pixels is 0 micrometer in a direction parallel to the surface of the array substrate (100).

3. The Liquid Crystal Display device of claim 1, wherein the transparent electrode (171, 172, 173) and the reflection metal layer (161, 162, 163) in the same pixel are electrically connected.

4. The Liquid Crystal Display device of claim 3, wherein the data lines of the adjacent pixels are electrically insulated by the second insulation layer (140).

5. The Liquid Crystal Display device of claim 4, wherein the distance between the transparent electrodes (171, 172, 173) and the reflection metal layers (161, 162, 163) each of which is belonging to different adjacent pixels is 0 micrometer in a direction parallel to the surface of the array substrate (100).

6. The Liquid Crystal Display device of claim 1, wherein the transparent electrodes (171, 172, 173) are made of tin indium oxide.

7. The Liquid Crystal Display device of claim 1, wherein color resistors (231, 231b, 232, 232b, 233, 233b) and transparent electrodes (220) covering the color resistors and a surface of the color film substrate (210) are formed on the color film substrate (210).

8. The Liquid Crystal Display device of claim 7 being configured such that the light reflected by the reflection regions (R) exits from the color film substrate (210) via the color resistors (231, 231b, 232, 232b, 233, 233b).

9. The Liquid Crystal Display device of claim 7 being configured such that the light transmitted by the transmission regions (T) exits from the color film substrate (210) via the color resistors (231, 231b, 232, 232b, 233, 233b).

10. The Liquid Crystal Display device of claim 1, further comprising a backlight unit being configured to emit light and the Liquid Crystal Display being configured such that the light emitted by the backlight unit is transmitted by the transparent electrodes (171, 172, 173) and exits from the color film substrate (210).

## Patentansprüche

1. Flüssigkristallanzeigevorrichtung, umfassend:
ein Arraysubstrat (100),
ein Farbfilmsubstrat (210),
eine erste Isolationsschicht (120) auf dem Arraysubstrat (100),
Datenleitungen (131; 132; 133), die auf der ersten Isolationsschicht (120) angeordnet sind,
eine zweite Isolationsschicht (140), welche die Datenleitungen (131; 132; 133) bedeckt,
und eine Anzahl von Pixeleinheiten, die zwischen dem Arraysubstrat (100) und dem Farbfilmsubstrat (210) angeordnet sind,
wobei
jede der Pixeleinheiten einen Lichtreflexionsbereich (R), eine dritte Isolationsschicht (151; 152; 153), die auf einer partiellen Oberfläche der zweiten Isolationsschicht (140) und einem Lichttransmissionsbereich (T) angeordnet ist,
wobei in jeder der Pixeleinheiten eine transparente Elektrode (171; 172; 173), die an der Oberfläche der zweiten Isolationsschicht (140) angeordnet ist, in dem Lichttransmissionsbereich (T) gebildet wird, und
eine Reflexionsmetallschicht (161; 162; 163), die auf einer Oberfläche der dritten Isolationsschicht (151; 152; 153) angeordnet ist, in dem Lichtreflexionsbereich (R) gebildet wird, wobei beide zu demselben Pixel gehören,
wobei die transparenten Elektroden (171; 172; 173) und die Reflexionsmetallschichten (161; 162; 163), von denen jede zu unterschiedlichen benachbarten Pixeleinheiten gehört elektronisch isoliert voneinander sind durch die dritten Isolationsschichten (151; 152; 153), und ein Abstand zwischen den transparenten Elektroden (171; 172; 173) und den Reflexionsmetallschichten (161; 162; 163), von denen jede zu unterschiedlichen benachbarten Pixeleinheiten gehört, beträgt nicht mehr als 1 Mikrometer in einer Richtung parallel zu dem Arraysubstrat (100),
und wobei in jedem der Pixel die Reflexionsmetallschicht (161; 162; 163) eine L-Form aufweist und eine longitudinale Reflexionsmetallschicht einschließt, die den ersten Ast der L-Form ausbildet und welche die Datenleitungen bedeckt, und eine laterale Reflexionsmetallschicht, die den zweiten Ast der L-Form ausbildet, und ein Speicherkondensator zwischen der lateralen Reflexionsmetallschicht und dem Arraysubstrat (100) unter der lateralen Reflexionsmetallschicht gebildet wird.

2. Flüssigkristallanzeigevorrichtung nach Anspruch 1, wobei der Abstand zwischen den Lichtreflexionsbereichen (R) und den Lichttransmissionsbereichen (T), die jeweils zu unterschiedlichen benachbarten Pixeleinheiten gehören, 0 Mikrometer in einer Richtung parallel zur Oberfläche des Arraysubstrats (100) beträgt.

3. Flüssigkristallanzeigevorrichtung nach Anspruch 1, wobei die transparente Elektrode (171; 172; 173) und die Reflexionsmetallschicht (161; 162; 163) in demselben Pixel elektrisch verbunden sind.

4. Flüssigkristallanzeigevorrichtung nach Anspruch 3, wobei die Datenleitungen der benachbarten Pixeleinheiten elektrisch isoliert sind von der zweiten Isolationsschicht (140).

5. Flüssigkristallanzeige nach Anspruch in 4, wobei der Abstand zwischen den transparenten Elektroden (171; 172; 173) und den Reflexionsmetallschichten (161; 162; 163), die jeweils zu unterschiedlichen benachbarten Pixeleinheiten gehören, 0 Mikrometer in einer Richtung parallel zu der Oberfläche des Arraysubstrats (100) beträgt.

6. Flüssigkristallanzeigevorrichtung nach Anspruch 1, wobei die transparenten Elektroden (171; 172; 173) aus Zinn-Indiumoxid hergestellt sind.

7. Flüssigkristallanzeigevorrichtung nach Anspruch 1, wobei Farbwiderstände (231, 231b, 232, 232b, 233, 233b) und transparente Elektroden (220), die die Farbwiderstände und eine Oberfläche des Farbfilmsubstrats (210) abdecken, auf dem Farbfilmsubstrat (210) ausgebildet sind.

8. Flüssigkristallanzeigevorrichtung nach Anspruch 7, die so konfiguriert ist, dass das von den Reflexionsbereichen (R) reflektierte Licht über die Farbwiderstände (231, 231b, 232, 232b, 233, 233b) aus dem Farbfilmsubstrat (210) austritt.

9. Flüssigkristallanzeigevorrichtung nach Anspruch 7, die so konfiguriert ist, dass das von den Transmissionsbereichen (T) übertragene Licht über die Farbwiderstände (231, 231b, 232, 232b, 233, 233b) aus dem Farbfilmsubstrat (210) austritt.

10. Flüssigkristallanzeigevorrichtung nach Anspruch 1, ferner umfassend eine Hintergrundbeleuchtungseinheit, die so konfiguriert ist, dass sie Licht emittiert, und wobei die Flüssigkristallanzeigevorrichtung so konfiguriert ist, dass das von der Hintergrundbeleuchtungseinheit bereitgestellte Licht durch die transparenten Elektroden (171; 172; 173) transmittiert wird und aus dem Farbfilmsubstrat (210) austritt.

## Revendications

1. Un dispositif d'affichage à cristaux liquides, comprenant :
un substrat de réseau (100),
un substrat de film couleur (210),
une première couche d'isolation (120) sur le substrat de réseau (100),
des lignes de données (131 ; 132 ; 132) situées sur la première couche d'isolation (120),
une seconde couche d'isolation (140) recouvrant les lignes de données (131 ; 132 ; 132), et
et un certain nombre d'unités de pixel situées entre le substrat de réseau (100) et le substrat de film couleur (210),
dans lequel
chacune des unités de pixel comprend une région de réflexion (R), une troisième couches d'isolation (151 ; 152 ; 153) située sur une surface partielle de la seconde couche d'isolation (140) et une région de transmission de lumière (T),
dans lequel
dans chacune des unités de pixel
une électrode transparente (171 ; 172 ; 173) étant située sur la surface la seconde couche d'isolation (140) est formée dans la région de transmission de lumière (T), et une couche de métal de réflexion (161 ; 162 ; 163) localisée sur une surface de la troisième couche d'isolation (151 ; 152 ; 153) est formée dans la région de réflexion de lumière (R), chacune desquelles appartient à la même unité de pixel,
dans lequel les électrodes transparentes (171 ; 172 ; 173) et les couches de métal de réflexion (161 ; 162 ; 163), chacune desquelles appartenant à des unités de pixels adjacentes différentes, sont isolées électriquement les unes des autres par les troisièmes couches d'isolation (151 ; 152 ; 153), et une distance entre les électrodes transparentes (171 ; 172 ; 173) et les couches de métal de réflexion (161 ; 162 ; 163), chacune desquelles appartenant à des unités de pixels adjacents différents, n'est pas supérieure à 1 micromètre dans une direction parallèle à la surface du substrat de réseau (100),
et dans lequel, dans chacune des unités de pixels,
la couche de métal de réflexion (161 ; 162 ; 163) est en forme de L et comprend une couche de métal de réflexion longitudinale formant la première branche de la forme de L et recouvrant les lignes de données et une couche de métal de réflexion latérale formant la seconde branche de la forme de L, et un capaciteur de stockage est formé entre la couche de métal de réflexion latérale et le substrat de réseau (100) sous la couche de métal de réflexion latérale.

2. Le dispositif d'affichage à cristaux liquides selon la revendication 1, dans lequel la distance entre les régions de réflexion de lumière (R) et les régions de transmission de lumière (T), chacune desquelles appartenant à des unités de pixels adjacentes différentes, est 0 micromètres dans une direction parallèle à la surface du substrat de réseau (100).

3. Le dispositif d'affichage à cristaux liquides selon la revendication 1, dans lequel l'électrode transparente (171 ; 172 ; 173) et la couche de métal de réflexion (161 ; 162 ; 163) dans la même unité de pixels sont électriquement connectés.

4. Le dispositif d'affichage à cristaux liquides selon la revendication 3, dans lequel les lignes de données des unités de pixels adjacentes sentent électriquement isoler par la seconde couche d'isolation (140).

5. Le dispositif d'affichage à cristaux liquides selon la revendication 4, dans lequel la distance entre les électrodes transparentes (171 ; 172 ; 173) et les couches de métal de réflexion (161 ; 162 ; 163), chacune desquelles appartenant à des unités de pixels adjacentes différentes, comporte 0 micromètres dans une direction parallèle à la surface du substrat de réseau (100).

6. Le dispositif d'affichage à cristaux liquides selon la revendication 1, dans lequel les électrodes transparentes (171, ; 172 ; 173) sont fabriqués d'oxyde d'étain et d'indium.

7. Le dispositif d'affichage à cristaux liquides selon la revendication 1, dans lequel des résistances de couleur (231, 231b, 232; 232b, 233, 233b) et des électrodes transparentes (220) recouvrant les résistances de couleur et une surface du substrat de film de couleur (210) sont formées sur le substrat de film de couleur (210).

8. Le dispositif d'affichage à cristaux liquides selon la revendication 7, étant configuré tel, que la lumière réfléchie par les régions de réflexion (R) sort du substrat de film de couleur (210) par l'intermédiaire des résistances de couleur (231, 231b, 232; 232b, 233, 233b).

9. Le dispositif d'affichage à cristaux liquides selon la revendication 7, étant configuré tel, que la lumière transmise par les régions de transmission (T) sort du substrat de film de couleur (210) par l'intermédiaire des résistances de couleur (231, 231b, 232; 232b, 233, 233b).

10. Le dispositif d'affichage à cristaux liquides selon la revendication 1, comprenant en outre une unité de rétro-éclairage étant configuré afin de démettre de la lumière et le dispositif d'affichage à cristaux liquides étend configuré tel, que la lumière émise par l'unité de rétro-éclairage est transmise par les électrodes transparentes (171 ; 172 ; 173) et sort du substrat de films de couleur (210).
